(19) Europäisches Patentamt
European Patent Office
Office européen des brevets

(11) Veröffentlichungsnummer: **0 180 881**
**A2**

(12) # EUROPÄISCHE PATENTANMELDUNG

(21) Anmeldenummer: 85113675.4

(22) Anmeldetag: 28.10.85

(51) Int. Cl.⁴: C 01 G 49/06
C 09 D 5/00, C 08 K 13/00
C 03 C 14/00, H 01 F 1/00

(30) Priorität: 09.11.84 DE 3440911

(43) Veröffentlichungstag der Anmeldung: 14.05.86 Patentblatt 86/20

(84) Benannte Vertragsstaaten: DE FR GB IT NL

(71) Anmelder: BAYER AG
Konzernverwaltung RP Patentabteilung
D-5090 Leverkusen 1 Bayerwerk(DE)

(72) Erfinder: Franz, Gerhard, Dr.
Bodelschwinghstrasse 22
D-4150 Krefeld(DE)

(72) Erfinder: Schönfelder, Lothar, Dr.
Friedensstrasse 235
D-4150 Krefeld(DE)

(72) Erfinder: Heine, Heinrich, Dr.
Bärenstrasse 13
D-4150 Krefeld 1(DE)

(54) **Plättchenförmige Eisenoxidpigmente, Verfahren zu ihrer Herstellung und deren Verwendung.**

(57) Die vorliegende Erfindung betrifft plättchenförmige α-Eisenoxidpigmente mit einem $Fe_2O_3$-Gehalt von mindestens 88 %, einem mittleren Teilchendurchmesser von 0,5 bis 20 µm und einem mittleren Verhältnis von Durchmesser zu Dicke von 20 bis 100, Verfahren zu ihrer Herstellung sowie die Verwendung dieser Pigmente zur Einfärbung von Substraten und als Ausgangsprodukt für die Herstellung von Magnetpigmenten.

EP 0 180 881 A2

Croydon Printing Company Ltd.

0180881

BAYER AKTIENGESELLSCHAFT 5090 Leverkusen, Bayerwerk
Konzernverwaltung RP 08. Nov. 1984
Patentabteilung St/li-c

# Plättchenförmige Eisenoxidpigmente, Verfahren zu ihrer Herstellung und deren Verwendung

Die vorliegende Erfindung betrifft plättchenförmige α-Eisenoxidpigmente mit einem $Fe_2O_3$-Gehalt von mindestens 88 %, einem mittleren Teilchendurchmesser von 0,5 bis 20 µm und einem mittleren Verhältnis von Durchmesser zu Dicke von 20 bis 100, Verfahren zu ihrer Herstellung sowie die Verwendung dieser Pigmente zur Einfärbung von Substraten und Ausgangsprodukt für die Herstellung von Magnetpigmenten.

Plättchenförmige Pigmente werden für Einfärbungen von Metalleffekt-Beschichtungen verwendet, insbesondere werden plättchenförmige Aluminiumpigmente schon seit langer Zeit eingesetzt. Zur Erzielung verschiedenartiger Farbeffekte müssen sie jedoch mit transparenten Farbpigmenten vermischt werden, was wegen der Neigung zur Entmischung aus lacktechnischen Aspekten nachteilig beurteilt wird. Auch besitzen Aluminiumplättchen nur begrenzte Korrosionsbeständigkeit.

Pigmente aus plättchenförmig kristallisiertem Hämatit besitzen die vorgenannten Nachteile nicht. Die schöne

kupferfarbene bis rote Eigenfärbung und der starke Metalleffekt von plättchenförmigem α-Eisenoxid lassen sich jedoch erst voll zur Geltung bringen, wenn es gelingt, Plättchengeometrie und chemische Zusammensetzung unabhängig voneinander zu variieren.

Bei der am häufigsten zur Herstellung plättchenförmiger Eisenoxide angewendeten Hydrothermalsynthese gelingt die Beeinflussung der Teilchendurchmesser durch die Wahl bestimmter Alkalikonzentrationen (DE-OS 2 056 042). Zusätze von Oxiden der Elemente der IV., V. und/oder VI. Haupt- und/oder der II. Nebengruppe des Periodensystems der Elemente sollen das Schichtdickenwachstum getrennt vom Wachstum in der Plättchenebene steuern (EP-PS 14 382). Durch Einbau von Aluminiumoxid in das Hämatitgitter kann die Farbe der Plättchen verändert werden, ohne daß dadurch die Teilchengeometrie, und somit die Stärke des Metalleffektes, beeinflußt würde (DE-OS 3 124 746). Die Teilchendurchmesser können bei diesem Verfahren ebenfalls nur über unterschiedliche Alkalikonzentrationen eingestellt werden, was aber die Einbauraten von Aluminium und anderen Fremdionen in das Hämatitgitter beeinflußt.

Infolge dieser Vielzahl von sich gegenseitig beeinflussenden Reaktionsparametern bedeutete es bislang einen erheblichen technischen Aufwand, die ganze Palette interessanter Produkte herzustellen. Insbesondere war es nicht möglich, bei gleichbleibenden Eigenschaften wie z. B. Dispergierverhalten, Fremdionengehalt, die Teilchengrößen der Plättchen frei zu variieren. Die Einbauraten für

Fremdionen sind abhängig von dem Medium, in dem die hydrothermale Behandlung durchgeführt wird. Bei allen bislang bekannten Verfahren lassen sich aber die Teilchengrößen ebenfalls nur durch Änderung des Reaktionsmediums beeinflussen.

Die magnetischen Eigenschaften von Festkörpern sind stark von ihrer chemischen Zusammensetzung, ihrer Teilchengröße, Teilchengeometrie und insbesondere ihrer Teilchengrößenverteilung abhängig. Die Forderung nach einer definierten Beeinflussung der Teilchengröße wird folglich dann besonders wichtig, wenn die plättchenförmigen $\alpha$-Eisenoxide als Vorläuferverbindungen für die Herstellung magnetischer Pigmente Verwendung finden sollen. Darüber hinaus war es nach den bekannten Verfahren nicht möglich, plättchenförmige Eisenoxide mit derartig engen Teilchengrößenverteilungen herzustellen, wie sie in der heutigen Technik von magnetischen Pigmenten gefordert werden.

Die Nachteile der bekannten Verfahren zur hydrothermalen Herstellung plättchenförmiger $\alpha$-Eisenoxide sollen sich nach der japanischen Patentanmeldung JA 80 16 978 durch ein Keimverfahren vermeiden lassen. Es werden plättchenförmige $\alpha$-Eisenoxide, die ihrerseits aus einer hydrothermalen Reaktion stammen, als Keime für die Herstellung noch gröberer plättchenförmiger Pigmentteilchen eingesetzt. Dieser Syntheseweg ist aber nicht geeignet, die geschilderten Probleme zu beseitigen. Zum einen ist die Keimherstellung selbst von den vielfältigen Reaktionsparametern der Hydrothermalsynthese abhängig, zum

anderen lassen sich nur sehr grobteilige Keime und damit auch nur grobteilige Endprodukte herstellen, die nicht die gewünschten Farbreinheiten und Helligkeiten aufweisen.

Die Aufgabe der vorliegenden Erfindung ist es daher, plättchenförmige α-Eisenoxidgruppen zur Verfügung zu stellen, die nicht den Nachteil der bekannten aufweisen.

In hervorragender Weise erfüllt wird die Forderung von den erfindungsgemäßen plättchenförmigen α-Eisenoxidpigmenten mit einem $Fe_2O_3$-Gehalt von mindestens 88 %, einem mittleren Teilchendurchmesser von 0,5 bis 20 µm und einem mittleren Verhältnis von Durchmesser zu Dicke von 20 bis 100, die dadurch gekennzeichnet sind, daß sie eine annähernd normalverteilte Teilchengrößenverteilung aufweisen, deren auf den Mittelwert der Normalverteilung bezogene relative Standardabweichung kleiner als 0,3 ist.

Besonders bevorzugt sind dabei solche Pigmente, die einen Teilchendurchmesser von 1 bis 20 µm und ein mittleres Verhältnis von Durchmesser zu Dicke von 20 bis 60 aufweisen.

Die erfindungsgemäßen α-Eisenoxidpigmente sind erhältlich durch hydrothermale Behandlung von dreiwertiges Eisen enthaltenden Lösungen oder Suspensionen unter Zusatz von aktiven α-Eisenoxidkeinem mit plättchen- oder diskusförmiger Kristalltracht.

Überraschenderweise wurde auch gefunden, daß sich die Teilchengröße der erfindungsgemäßen Pigmente in weiten Grenzen und unabhängig von der Art des Reaktionsmediums beeinflussen lassen, wenn die hydrothermale Behandlung des Eisenhydroxids oder Eisenoxidhydroxides in Gegenwart von besonders feinteilig kristallisiertem $\alpha$-Eisenoxid durchgeführt wird. Es wurde ferner gefunden, daß bei Verwendung spezieller feinteiliger $\alpha$-Eisenoxidkeime plättchenförmige Pigmente mit den gewünscht engen Teilchengrößenverteilungen anfallen.

Gegenstand der vorliegenden Erfindung ist somit auch ein Verfahren zur Herstellung der erfindungsgemäßen plättchenförmigen $\alpha$-Eisenoxidpigmente, wobei diese auf hydrothermalem Weg aus dreiwertiges Eisen enthaltenden Lösungen oder Suspensionen erhalten werden, wobei den Lösungen oder Suspensionen vor der hydrothermalen Behandlung aktive $\alpha$-Eisenoxidkeime mit plättchen- oder diskusförmiger Kristalltracht und spezifischen Oberflächen von mindestens 10 $m^2/g$ zugesetzt werden.

Die Keime sind bereits in kleinsten Mengen wirksam, sie sind aber auch noch in größeren Mengen einsetzbar und wirksam.

Bevorzugt werden beim erfindungsgemäßen Verfahren die Keime in Mengen von 0,001 bis 10 Gew.-%, bevorzugt von 0,005 bis 5 Gew.-%, bezogen auf das bei der hydrothermalen Behandlung entstehende plättchenförmige $\alpha$ -Eisenoxidpigment, zugesetzt.

Prinzipiell können zur Herstellung der Keime alle die Verfahren angewendet werden, bei denen $\alpha$-Eisenoxidteilchen mit den geforderten Eigenschaften anfallen. Besonders gute Ergebnisse werden aber mit solchen plättchenförmigen $\alpha$-$Fe_2O_3$-Teilchen erreicht, die bei der Alterung von amorphem Eisen(III)-hydroxid bei erhöhter Temperatur in Gegenwart von Oxalationen entstehen.

Wenn diese Alterung des amorphen Eisen(III)-hydroxides zum $\alpha$-$Fe_2O_3$ in Suspensionen vorgenommen wird, die zusätzlich noch Calciumionen enthalten, fallen Keime an, die eine besonders hervorragende Wirkung bei der hydrothermalen Synthese von grobteiligen erfindungsgemäßen Pigmenten zeigen.

Das Verfahren zur Herstellung der $\alpha$-$Fe_2O_3$-Keime aus Eisen(III)-hydroxid läuft im einzelnen wie folgt ab: Ausgangsverbindungen sind Eisen(III)-salze, die gegebenenfalls unter Zusatz geringer Mengen an Säuren rückstandsfrei in Wasser gelöst werden. Die Konzentrationen sind so zu wählen, daß einerseits hohe Raum-Zeit-Ausbeuten erzielt werden, andererseits aber die Viskositäten bei der Fällung nicht zu stark ansteigen. Gute Ergebnisse werden beispielsweise mit Konzentrationen von 0,25 Mol/l bei Verwendung von Eisen(III)-sulfat, -nitrat oder -chlorid erzielt.

Die Ausfällung des amorphen Hydroxides erfolgt durch Zugabe einer löslichen alkalisch reagierenden Verbindung, vorzugsweise von Alkalihydroxid, Alkalicarbonat oder von Ammoniak. Die Fällung kann schnell unter starkem Rühren oder auch durch tropfenweise Zugabe des Fällungsreagens vorgenommen werden. Nach Beendigung der Fällung darf der pH-Wert der Hydroxidsuspension nicht über 11 liegen.

Zur Überführung des amorphen Eisen(III)-hydroxides in kristallines feinteiliges $\alpha$-$Fe_2O_3$ muß die Suspension einer Temperaturbehandlung (Alterung) unterzogen werden. Eine schnelle und vollständige Kristallisation von $\alpha$-$Fe_2O_3$ mit weitestgehender Unterdrückung von $\alpha$-FeOOH wird erreicht, wenn die Suspension Oxalationen in Konzentrationen von 0,001 bis 0,5 Mol/l enthält und einen pH-Wert von 7 bis 11 hat. Die Einstellung der Oxalatkonzentration kann vor oder nach der Hydroxidfällung durch Zugabe entsprechender Mengen an Oxalsäure oder Alkalioxalaten erfolgen. Es ist sogar möglich, frisch gefälltes Eisen(III)-hydroxid zunächst von der Mutterlauge abzutrennen und dann nach Resuspendierung in Oxalat-haltiger Lösung der Alterung zu unterwerfen.

Die Temperaturbehandlung der Hydroxidsuspension muß solange fortgeführt werden, bis das amorphe Hydroxid in röntgenkristallines $\alpha$-$Fe_2O_3$ umgewandelt ist. Die Reaktionszeit hängt außer von der Oxalatkonzentration vor allem von der Temperatur ab. Bei 70°C werden Zeiten um 24 h benötigt, bei 150°C läuft die Reaktion unter Druck bereits in einer Stunde vollständig ab.

Zur Herstellung besonders wirksamer Keime werden der Ausgangslösung oder -suspension vor oder nach der Hydroxidfällung zusätzlich Calciumionen in Form löslicher Calciumverbindungen bevorzugt in Mengen von 0,1 bis 1 Mol je Mol entstehendes α-Eisenoxid zugesetzt.

Soll das feinteilige α-$Fe_2O_3$ nach der Alterung als Keim für Hydrothermalsynthesen weiterverwendet werden, so erfolgt die Aufarbeitung nur durch mehrmaliges Dekantieren und Resuspendieren; das Produkt wird anschließend im feuchten Zustand eingesetzt.

Die Keime sind einheitlich im Kristallgitter des Hämatit kristallisiert. Als typische Eigenschaften weisen die Einzelteilchen eine sehr gleichmäßige plättchen- bis diskusförmige Kristalltracht auf, die in elektronenmikroskopischen Aufnahmen deutlich zu erkennen ist (Fig. 1). Die Teilchendurchmesser liegen in der Nähe von 0,1 µm. Die nach der BET-Methode bestimmte spezifische Oberfläche ist immer größer als 10 $m^2/g$, besonders wirksame Keime weisen Oberflächen von 15 bis 100 $m^2/g$ auf.

In einer weiteren Ausführungsform des erfindungsgemäßen Verfahrens werden als Keime solche Teilchen von α-Eisenoxid eingesetzt, wie sie, aus der DE-OS 22 49 274 bekannt, bei der Oxidation von Eisen(II)-hydroxid mit Luft in Gegenwart von keimmodifizierenden Zusätzen entstehen.

Die so hergestellten Keime sind sehr oberflächenreich und besitzen überwiegend Hämatitstruktur. Die spezifischen Oberflächen lassen sich in weiten Grenzen von 10 bis 140 $m^2/g$ variieren. Weiterhin zeigen die in der DE-OS 2 508 932 beschriebenen feinteiligen Produkte mit Oberflächen $> 40\ m^2/g$ besonders gute Keimwirkung bei der Hydrothermalsynthese plättchenförmiger Eisenoxide. Sie bestehen aus meist diskusförmigen Teilchen im Größenbereich unter 0,1 µm.

Nach den genannten Verfahren hergestellte feinteilige $\alpha$-$Fe_2O_3$-Keime mit BET-Oberflächen über 10 $m^2/g$ zeigen bei der Hydrothermalsynthese von $\alpha$-Eisenoxidpigmenten eine starke Keimwirkung, dadurch wachsen die aus Eisen-(III)-hydroxid oder -oxidhydroxiden neu gebildeten Partikel von $\alpha$-$Fe_2O_3$ auf den vorgegebenen feinkristallinen Keimteilchen auf. Die Eigenschaften des Endproduktes sind somit nicht nur durch die bekannten Parameter der Hydrothermalsynthese, sondern vielmehr durch die Art und Menge an Keim bestimmt.

Zur Prüfung der Keimwirkung wird folgende Methode angewandt:
Ein nach dem Fällungsverfahren technisch hergestelltes Eisenoxidgelb ($\alpha$-FeOOH) wird in konzentrierter Natronlauge suspendiert. Nach Zugabe von Keimen in Mengen von 0,001 bis 10 %, bezogen auf FeOOH, wird die Suspension einer hydrothermalen Behandlung bei 200°C unterworfen.

Nach 4 h ist eine vollständige Umwandlung des eingesetzten FeOOH zu plättchenförmigem $\alpha$-$Fe_2O_3$ gewährleistet.

Ohne Keimzusatz fällt unter diesen Bedingungen ein dunkel violettrotes Produkt an, bestehend aus plättchenförmigen Kristallen mit Durchmessern von 20 µm und darüber. Die niedrigsten gerade noch wirksamen Keimmengen von 0,001 % bewirken eine Verringerung der mittleren Teilchendurchmesser auf Werte bis 20 µm und eine Änderung der Farbe zu den gewünschten hellen, kupferfarbenen Tönen. Mit steigender Keimmenge werden die Produkte zunehmend feinteiliger, die Teilchendurchmesser fallen bei Keimmengen von 10 % bis auf Werte von 0,5 bis 1 µm. Alle Produkte besitzen helle, metallisch glänzende Farben mit Farbreinheiten, die deutlich über dem Niveau von vergleichbaren, aber ohne Keimzusatz hergestellten plättchenförmigen $\alpha$-Eisenoxiden liegen. Bei Messung der Farbwerte im CIELab-Farbsystem (DIN 6174) äußert sich dieser Sachverhalt durch hohe Werte für die Helligkeit L* und die Buntheit $C^*_{ab}$.

Produkte mit hervorragendem Metalleffekt und sehr hoher Helligkeit erhält man bei Keimmengen von 0,05 bis 1 %. Diese Bedingungen sind somit für die Herstellung von Pigmenten für Effekteinfärbungen besonders geeignet.

Gegenstand dieser Erfindung ist somit die Verwendung der erfindungsgemäßen plättchenförmigen $\alpha$-Eisenoxid-

pigmente zur Einfärbung von dekorativen Substraten und Beschichtungen aus Lacken, Kunststoffen und Emails.

Als Ausgangsmaterial für die Herstellung plättchenförmiger magnetischer Eisenoxide oder Eisenteilchen benötigt man feinteiligeres $\alpha$-Eisenoxid. Es kann durch hydrothermale Reaktion bei höherer Keimmenge und/oder niedrigerer Alkalikonzentration aus technischen Eisenoxidhydroxiden hergestellt werden. Die etwa 1 µm großen plättchenförmigen Teilchen lassen sich unter Beibehaltung ihrer Form zu Magnetit oder Eisenmetall reduzieren bzw. durch Reduktion und anschließende Oxidation in Maghämit ( $\gamma$-$Fe_2O_3$) überführen.

Die erfindungsgemäßen plättchenförmigen $\alpha$-Eisenoxidpigmente sind somit gut geeignet für die Verwendung als Ausgangsmaterial zur Herstellung plättchenförmiger magnetischer Teilchen von Magnetit, Maghämit oder bertholoider Phasen der Zusammensetzung $Fe_{3-x}O_{4-x}$, wobei x Werte von 0 bis 1 annehmen kann.

Alle erfindungsgemäßen Pigmente weisen eine enge Teilchengrößenverteilung auf. Unter Teilchengröße wird der Durchmesser eines Kreises verstanden, der die meist hexagonale Plättchenebene umschreibt. Zur Bestimmung dieses Durchmessers werden mit dem Rasterelektronenmikroskop (SEM) bei 1000- bis 10000facher Vergrößerung Aufnahmen der Proben angefertigt. Die Auswertung erfolgt mit einem Bildanalysegerät durch Umfahren der Partikelkonturen. Von jeder Probe werden auf diese Weise ca. 1000 Einzelteilchen ausgemessen. In Fig. 2 ist eine Durchmesserverteilung (Histogramm) eines typischen Produktes dargestellt und mit einer Gauß-Normalverteilung verglichen.

Zur quantitativen Auswertung wird eine Gauß-Normalverteilung an die Meßwerte angepaßt und aus dieser Kurve Mittelwert d und Standardabweichung $\sigma$ bestimmt. Die erfindungsgemäßen Pigmente zeichnen sich dadurch aus, daß die auf den Mittelwert bezogene relative Standardabweichung, d.h. der Wert von $\sigma$ /d, bei maximal 0,3 liegt. Sie ist damit deutlich kleiner als bei herkömmlichen Produkten ($\geq$ 0,4). Sichtbarer Ausdruck einer derartigen engen Teilchengrößenverteilung ist die hohe Helligkeit und Farbreinheit der Produkte.

Im folgenden wird die Erfindung beispielhaft erläutert, ohne daß darin eine Beschränkung der Erfindung zu sehen ist.

Beispiel 1

In 700 ml Wasser wurden 0,25 Mol $Fe(NO_3)_3 \cdot 9 H_2O$ gelöst und durch Zugabe von 2,5 N KOH in 30 min Eisen(III)-hydroxid gefällt. Der pH-Wert lag nach Ende der Fällung bei 9. Zu der Suspension wurden 0,05 Mol Oxalsäuredihydrat zugegeben und gelöst. Der pH-Wert wurde durch weitere KOH wieder auf 9 zurückgestellt. Die Suspension wurde in einen Autoklaven gegeben und einer 3,5 h dauernden hydrothermalen Behandlung bei 120°C unterworfen. Dabei wandelte sich der ursprünglich rotbraune Niederschlag von amorphem Eisenhydroxid in feinteilige Plättchen von kristallinem α-Eisenoxid um. Es folgte eine Reinigung des Feststoffs durch mehrmaliges Dekantieren. Der so erhaltene Keim wurde in Suspension aufbewahrt.

Zu einer stark alkalischen Suspension von α-Eisenoxidhydroxid, das durch die Oxidation von $FeSO_4$ mit Luft in einem Zweistufenverfahren hergestellt worden war und das eine BET-Oberfläche von 15 $m^2/g$ aufwies wurden unterschiedliche Mengen der Keimsuspension zugesetzt. Die Alkalikonzentration betrug danach 8 N NaOH. Es folgte eine 4stündige hydrothermale Behandlung der Suspension bei 200°C bei der das α-Eisenoxidhydroxid in plättchenförmiges α-Eisenoxid überführt wurde. Nach Filtration, Waschung und Trocknung wurden die Pigmente in ein handelsübliches Alkydharz mit einer Pigment-Volumen-Konzentration von 10 % eingearbeitet. Die im CIELab-Farbsystem gemessenen Farbwerte sind in Tabelle 1 zusammengefaßt.

Tabelle 1 Versuchsergebnisse von Beispiel 1

| Keimmenge (%) | CIELAB-WERTE L* | a* | b* | $c^*_{ab}$ | BET-Oberfl. ($m^2/g$) | h[1] (µm) | d[2] (µm) |
|---|---|---|---|---|---|---|---|
| 0,01 | 46,8 | 11,6 | 3,5 | 12,1 | 1,1 | 0,35 | 12,0 |
| 0,02 | 48,0 | 12,9 | 4,5 | 13,7 | 1,3 | 0,29 | 9,5 |
| 0,05 | 49,8 | 14,8 | 6,2 | 16,1 | 1,9 | 0,20 | 7,0 |
| 0,10 | 49,9 | 15,1 | 7,0 | 16,7 | 2,3 | 0,17 | 5,5 |
| 0,50 | 47,1 | 14,3 | 6,7 | 15,8 | 4,1 | 0,093 | 3,5 |
| 1,0 | 42,2 | 13,7 | 6,0 | 15,0 | 4,2 | 0,091 | 2,5 |
| 2,0 | 39,9 | 14,9 | 6,2 | 16,1 | 5,0 | 0,076 | 2,0 |
| 5,0 | 39,0 | 17,6 | 8,1 | 19,3 | 5,4 | 0,071 | 1,0 |
| Nullversuch ohne Keim | 41,8 | 5,9 | -0,4 | 5,9 | | | |

1) Plättchendicke aus BET-Oberfläche errechnet

2) Plättchendurchmesser aus SEM-Aufnahmen geschätzt.

In der Tabelle sind außerdem die BET-Oberflächen der Produkte, die mittleren Plättchendicken, die aus der BET-Oberfläche errechnet wurden, und die aus elektronenmikroskopischen Aufnahmen ungefähr bestimmten Teilchendurchmesser zusammengestellt. Die Werte zeigen deutlich, wie durch Variation der Keimmengen die Teilchengrößen und farblichen Eigenschaften der Produkte beeinflußbar sind.

Beispiel 2

Beispiel 1 wurde in allen Einzelheiten nachgearbeitet, nur wurden bei der Keimherstellung vor der Fällung von $Fe(OH)_3$ noch 0,05 Mol Calciumionen in Form von $Ca(NO_3)_2 \cdot 4\ H_2O$ zugesetzt.

In Tabelle 2 sind wieder die Ergebnisse der Versuchsreihe zusammengefaßt. Die Wirkung der calciumhaltigen Keime ist stärker als die der calciumfreien. Insbesondere sind mit diesen Keimen hellere und farbreinere Pigmente herstellbar, die sich besonders gut für Metalleffekteinfärbungen verwenden lassen.

Tabelle 2 Versuchsergebnisse von Beispiel 3

| Keimmenge (%) | CIELAB - WERTE L* | a* | b* | $c^*_{ab}$ | BET-Oberfl. ($m^2/g$) | h[1] (µm) | d[2] (µm) |
|---|---|---|---|---|---|---|---|
| 0,01 | 46,7 | 12,3 | 8,1 | 14,7 | 1,3 | 0,29 | 13,0 |
| 0,02 | 50,4 | 14,0 | 11,2 | 17,9 | 1,7 | 0,22 | 10,5 |
| 0,05 | 51,8 | 15,7 | 12,5 | 20,0 | 2,5 | 0,15 | 8,0 |
| 0,10 | 52,4 | 16,6 | 13,8 | 21,6 | 3,3 | 0,12 | 6,5 |
| 0,50 | 54,8 | 17,4 | 18,6 | 25,5 | 4,5 | 0,085 | 3,5 |
| 1,0 | 52,9 | 16,6 | 19,0 | 25,3 | 5,3 | 0,072 | 2,5 |
| 2,0 | 50,5 | 16,4 | 18,8 | 24,9 | 5,7 | 0,067 | 2,0 |
| 5,0 | 44,9 | 18,5 | 17,1 | 25,5 | 6,8 | 0,056 | 1,5 |

1) Plättchendicke aus BET-Oberfläche errechnet

2) Plättchendurchmesser aus SEM-Aufnahmen geschätzt.

Beispiel 3

Die Herstellung des Keimes erfolgte wiederum analog Beispiel 1. Die Ausgangslösung enthielt 144 g $Fe(NO_3)_3$ · 9 $H_2O$ und 5,9 g $Ca(NO_3)_2$ in 700 ml Wasser. Die Fällung von $Fe(OH)_3$ wurde mit KOH bis zu einem pH-Wert von 9 vorgenommen; 6,2 g Oxalsäuredihydrat wurden zugesetzt und der pH-Wert wieder auf 9 gestellt. Die Umwandlung des amorphen $Fe(OH)_3$ in kristalline Plättchen von $\alpha$-$Fe_2O_3$ erfolgte durch dreistündiges Kochen der Suspension. Die nach dieser Verfahrensweise hergestellten Keime halten eine BET-Oberfläche von 24 $m^2/g$. In TEM-Aufnahmen ließen sich runde plättchen- bis diskusförmige Teilchen mit sehr enger Durchmesserverteilung von 0,06 bis 0,1 µm erkennen.

Die Keime wurden in unterschiedlichen Mengen zu alkalischen Suspensionen von $\alpha$-Eisenoxidhydrat zugesetzt, das durch Oxidation von $FeSO_4$ mit Luft hergestellt wurde und das eine röntgenographische Kristallitgröße von 150 A hatte. Die Alkalikonzentration betrug 8 N NaOH, die FeOOH-Konzentration 50 g/l. Es folgte eine vierstündige hydrothermale Behandlung bei 200°C, die zu einer Umwandlung des $\alpha$-Eisenoxidhydroxides in $\alpha$-Eisenoxid führte. Die Produkte wurden filtriert, gewaschen und getrocknet. Die Farbwerte wurden wie in Beispiel 1 beschrieben bestimmt. Die Verteilungen der Teilchendurchmesser (Fig. 2) wurden aus SEM-Aufnahmen bestimmt und sind in Tabelle 3 zusammengestellt.

Die Produkte zeigen die erfindungsgemäße enge Teilchengrößenverteilung und damit parallel laufend eine hohe Farbreinheit, die sich in hohen Werten für L* und $C^*_{ab}$ äußert.

<u>Tabelle 3</u> Versuchsergebnisse von Beispiel 3

| Keimmenge (%) | mittlerer Durchmesser | Standardabweichung $\sigma$ | BET-Oberfläche [m²/g] | h (aus BET) [µm] | $\frac{\sigma}{d}$ | CIELab-Werte L* | a* | b* | $C^*_{ab}$ |
|---|---|---|---|---|---|---|---|---|---|
| 0,01 | 9,5 | 2,1 | 1,1 | 0,35 | 0,22 | 46,8 | 12,7 | 5,2 | 13,7 |
| 0,05 | 7,2 | 1,7 | 1,8 | 0,21 | 0,24 | 48,8 | 16,0 | 8,2 | 18,0 |
| 0,10 | 6,4 | 1,4 | 2,6 | 0,15 | 0,22 | 50,9 | 18,8 | 11,1 | 21,9 |

Beispiel 4

Die Fällung des Eisen(III)-hydroxides erfolgte analog Beispiel 1. Die Suspension von $Fe(OH)_3$ wurde geteilt und unterschiedlichen thermischen Behandlungen (24 h bei 70°C, 5 h bei 100°C, 2 h unter Druck bei 120°C, 2 h unter Druck bei 250°C) unterworfen. Nach dieser Behandlung wurden Keime von α-Eisenoxid mit BET-Oberflächen von 106, 53, 21 bzw. 13,1 $m^2g^{-1}$ erhalten. Die Wirksamkeiten dieser Keime bei der hydrothermalen Umwandlung von α-Eisenoxidhydroxid zu plättchenförmigem α-Eisenoxid sind unterschiedlich (Tab. 4); die geringste Wirkung zeigt der bei 250°C hergestellte Keim; die farbreinsten Produkte werden mit dem bei 120°C hergestellten Keim erhalten.

**Tabelle 4** Versuchsergebnisse von Beispiel 4

| BET-Oberfläche des Keims $m^2/g$ | Keimmenge % | CIELab-Werte des α-Eisenoxids L* | a* | b* | $C^*_{ab}$ |
|---|---|---|---|---|---|
| 106 | 0,05 | 45,6 | 10,5 | 4,4 | 11,4 |
| 53 | 0,05 | 46,2 | 11,0 | 5,0 | 12,1 |
| 21 | 0,05 | 48,3 | 13,7 | 6,8 | 15,3 |
| 13,1 | 0,05 | 40,5 | 6,9 | 1,4 | 7,0 |
| Nullversuch | | 39,7 | 5,6 | 1,1 | 5,7 |

Beispiel 5

Bei der Keimherstellung wurde von der in den Beispielen 1 bis 4 beschriebenen Standardprozedur abgewichen. Es wurden die Oxalsäuremengen, die pH-Werte, die Art der Eisen(III)-verbindung, die Art des Alkalis, sowie Temperatur und Zeit der thermischen Behandlung variiert. Die einzelnen Versuchsparameter sind in Tabelle 4 zusammengestellt. Die Abtestung der Keime erfolgte nach dem in Beispiel 3 beschriebenen Standardverfahren mit 0,05 % und 0,1 % Keim bezogen auf FeOOH. Bei schwach wirksamen Keimen sind die Farbwerte der plättchenförmigen Eisenoxide nur geringfügig von denen des Produktes aus dem Nullversuch verschieden; bei sehr guter Wirksamkeit werden Helligkeiten L* von größer 50 gemessen.

Tabelle 5 Versuchsergebnisse von Beispiel 5

| Eisen(III)-verbindung | Keimherstellung: Menge (g) Oxalsäure | pH-Wert | Temperatur °C | Zeit h | sonstige Zusätze | Keimwirkung bei hydrothermaler behandlung 2) |
|---|---|---|---|---|---|---|
| Nitrat | 0,63 | 7 | 70 | 24 | - | sw |
| Nitrat | 6,3 | 7 | 70 | 24 | - | m |
| Nitrat | 0,63 | 9 | 70 | 24 | - | st |
| Nitrat | 6,3 | 9 | 70 | 24 | - | st |
| Nitrat | 0,63 | 11 | 70 | 24 | - | sw |
| Nitrat | 6,3 | 11 | 70 | 24 | - | sw |
| Sulfat | 6,3 | 9 | 70 | 24 | - | st |
| Chlorid | 6,3 | 9 | 70 | 24 | - | m |
| Nitrat | 6,3 | 9 | 100 | 3 | - | st |
| Nitrat | 6,3 | 9 | 150 | 1 | - | st |
| Nitrat | 31,5 | 9 | 70 | 24 | - | sw |
| Nitrat | 63 | 9 | 70 | 24 | - | ssw |
| Nitrat | 9,2 | 9 | 70 | 24 | Kaliumoxalat statt Oxalre | m |
| Nitrat | 6,3 | 9 | 70 | 24 | NaOH statt KOH | m-st |

1) alle Versuche mit 0,25 Mol Fe

2) ssw = sehr schwach; sw = schwach; m = Mittel; st = stark

Beispiel 6

Nach dem in den DE-OS 22 49 274 und 25 08 932 beschriebenen Zweistufenverfahren wurden rote Eisenoxidpigmente mit unterschiedlichen BET-Oberflächen hergestellt. Es handelte sich in allen Fällen um diskus- oder plättchenförmige Teilchen von α-Eisenoxid mit Durchmessern von maximal 0,1 µm. Die Produkte wurden als Keime bei der Hydrothermalsynthese von plättchenförmigem $\alpha$-$Fe_2O_3$ eingesetzt. Dazu wurde ein nach dem Anilinverfahren hergestelltes α-Eisenoxidhydroxid (BET-Oberfläche 28 $m^2/g$, 1,3 % $SiO_2$) in 8 N NaOH suspendiert. Zu dieser Suspension wurden 0,0025 bis 0,5 Gew.-% $\alpha$-$Fe_2O_3$-Keim zugesetzt. Die Feststoffkonzentration lag danach bei 50 g/l. Die Suspension wurde in einem Labor-Rührautoklav in 15 Minuten auf 260°C aufgeheizt und dann schnell abgekühlt. Die Aufarbeitung der plättchenförmigen α-Eisenoxide erfolgte in gewohnter Weise. Die Farbwerte der Produkte sind in Tabelle 6 zusammengestellt. Die Wirkung der Keime auf die Produkteigenschaften, speziell auf die Erhöhung von Helligkeit L* und Buntheit $c^*_{ab}$ ist deutlich erkennbar.

Tabelle 6

| Keimmenge | BET | BET | CIELAB-WERTE | | | |
|---|---|---|---|---|---|---|
| % | Keim $m^2/g$ | Produkt $m^2/g$ | L* | a* | b* | $c^*_{ab}$ |
| 0,0025 | 75 | - | 46,8 | 8,8 | 13,1 | 15,8 |
| 0,01 | 75 | - | 48,0 | 9,1 | 13,2 | 16,0 |
| 0,05 | 75 | - | 53,2 | 10,5 | 12,1 | 16,0 |
| 0,5 | 125 | 11,3 | 51,7 | 13,9 | 14,2 | 19,8 |
| 0,5 | 98 | 11,1 | 53,3 | 13,6 | 14,4 | 19,8 |
| 0,5 | 75 | 10,7 | 54,6 | 12,9 | 14,6 | 19,5 |

Patentansprüche

1. Plättchenförmige $\alpha$-Eisenoxidpigmente mit einem $Fe_2O_3$-Gehalt von mindestens 88 %, einem mittleren Teilchendurchmesser von 0,5 bis 20 µm und einem mittleren Verhältnis von Durchmesser zu Dicke von 20 bis 100, dadurch gekennzeichnet, daß sie eine annähernd normalverteilte Teilchengrößenverteilung aufweisen, deren auf den Mittelwert der Normalverteilung bezogene relative Standardabweichung kleiner als 0,3 ist.

2. Plättchenförmige $\alpha$-Eisenoxidpigmente gemäß Anspruch 1, dadurch gekennzeichnet, daß sie einen Teilchendurchmesser von 1 bis 20 µm und ein mittleres Verhältnis von Durchmesser zu Dicke von 20 bis 60 aufweisen.

3. Plättchenförmige $\alpha$-Eisenoxidpigmente gemäß einem der Ansprüche 1 oder 2, erhältlich durch hydrothermale Behandlung von dreiwertiges Eisen enthaltenden Lösungen oder Suspensionen unter Zusatz von aktiven $\alpha$-Eisenoxidkeimen mit plättchen- oder diskusförmiger Kristalltracht.

4. Verfahren zur Herstellung von plättchenförmigen $\alpha$-Eisenoxidpigmenten gemäß einem der Ansprüche 1 bis 3, dadurch gekennzeichnet, daß diese auf hydrothermalem Weg aus dreiwertiges Eisen enthaltenden Lösungen oder Suspensionen erhalten werden,

wobei den Lösungen oder Suspensionen vor der hydrothermalen Behandlung aktive $\alpha$-Eisenoxidkeime mit plättchen- oder diskusförmiger Kristalltracht und spezifischen Oberflächen von mindestens 10 $m^2/g$ zugesetzt werden.

5. Verfahren gemäß Anspruch 4, dadurch gekennzeichnet, daß die Keime in Mengen von 0,001 bis 10 Gew.-%, bevorzugt von 0,005 bis 5 Gew.-%, bezogen auf das bei der hydrothermalen Behandlung entstehende plättchenförmige $\alpha$-Eisenoxidpigment, zugesetzt werden.

6. Verfahren gemäß Anspruch 5, dadurch gekennzeichnet, daß die Keime durch thermische Behandlung von Eisen(III)-hydroxid in wäßrigen Suspensionen, die 0,001 bis 0,5 molar an Oxalationen sind, bei einem pH-Wert von 7 bis 11 und Temperaturen von 70 bis 150°C erhalten werden.

7. Verfahren gemäß Anspruch 6, dadurch gekennzeichnet, daß zusätzlich Calciumionen in Mengen von 0,1 bis 1 Mol je Mol entstehendes $\alpha$-Eisenoxid zugegen sind.

8. Verfahren gemäß Anspruch 5, dadurch gekennzeichnet, daß als Keime solche Teilchen von $\alpha$-Eisenoxid eingesetzt werden, wie sie, aus der DE-OS 22 49 274 bekannt, bei der Oxidation von Eisen(II)-hydroxid mit Luft in Gegenwart von keimmodifizierenden Zusätzen entstehen.

9. Verwendung von α-Eisenoxidpigmenten gemäß einem oder mehrerer der Ansprüche 1 bis 8 zur Einfärbung von dekorativen Substraten und Beschichtungen aus Lacken, Kunststoffen und Emails.

10. Verwendung von α-Eisenoxidpigmenten gemäß einem oder mehrer der Ansprüche 1 bis 8 als Ausgangsprodukt zur Herstellung plättchenförmiger magnetischer Teilchen von Magnetit, Maghämit oder bertholoider Phasen der Zusammensetzung $Fe_{3-x}O_{4-x}$, wobei x Werte von 0 bis 1 annehmen kann.

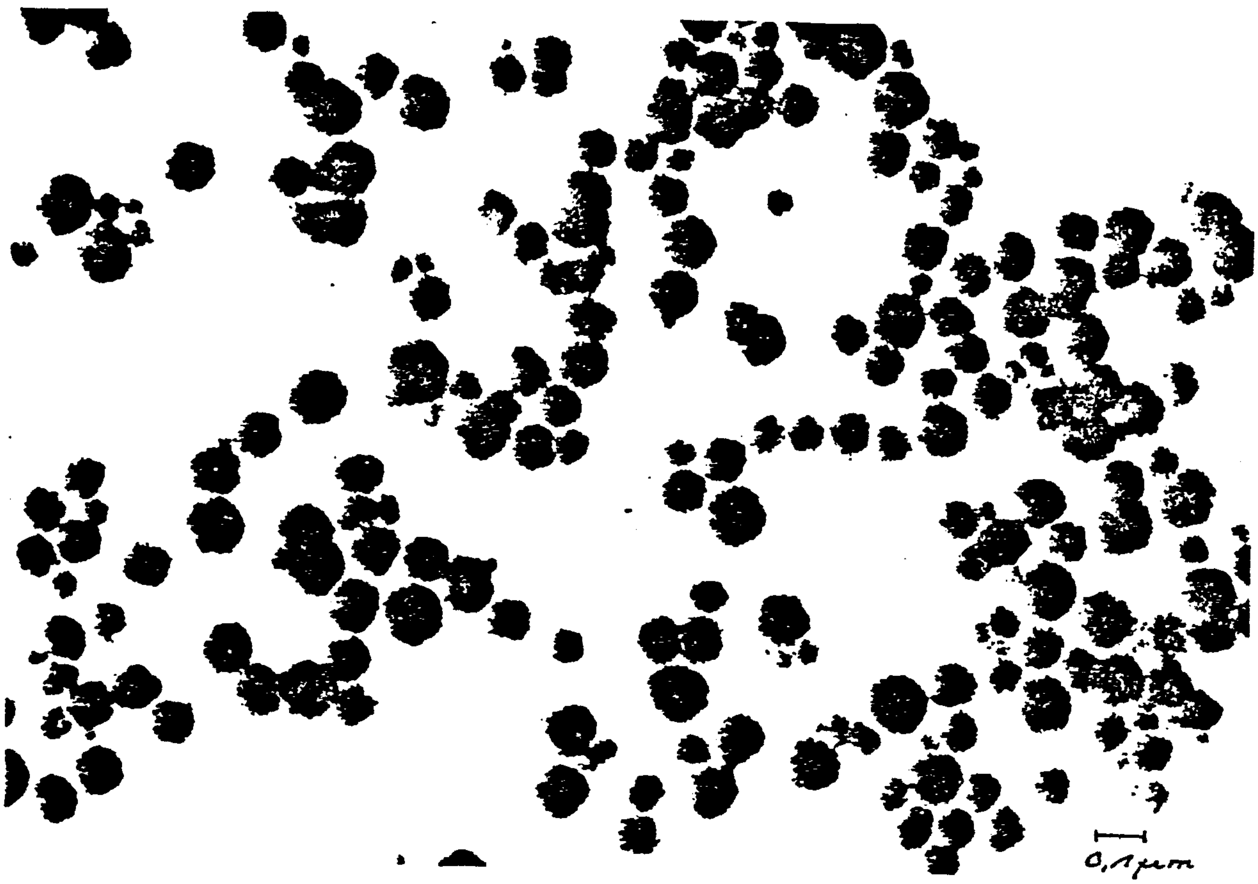


FIG. 1

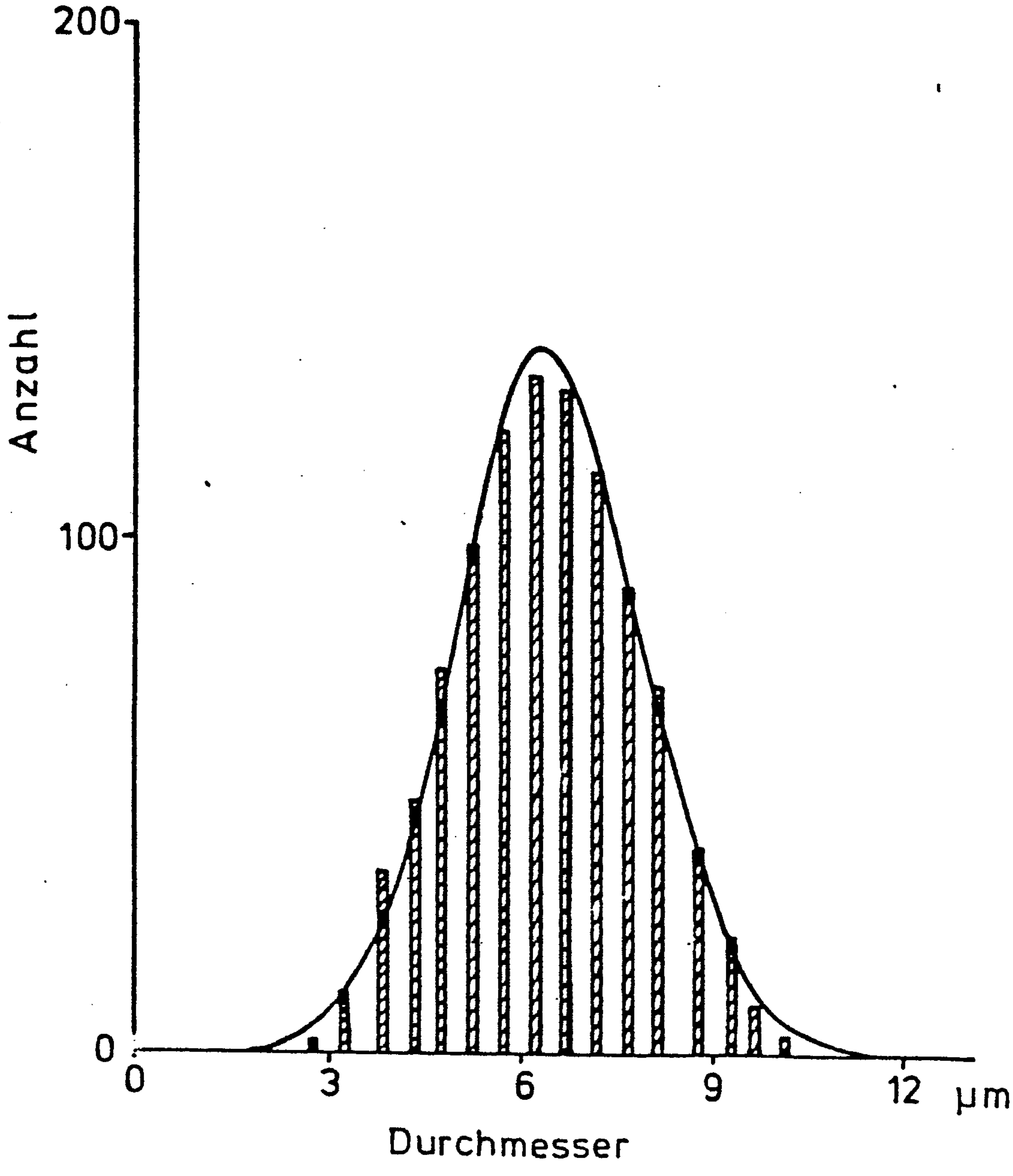


FIG. 2